## Europäisches Patentamt

## European Patent Office

## Office européen des brevets

(11) Veröffentlichungsnummer: **0 210 587**
**B1**

(12) **EUROPÄISCHE PATENTSCHRIFT**

(45) Veröffentlichungstag der Patentschrift:
03.01.90

(21) Anmeldenummer: 86110118.6

(22) Anmeldetag: 23.07.86

(51) Int. Cl.⁴: **B29C 67/22, B29C 33/12,
B29C 67/18
// B29L31:58**

(54) **Verfahren zur Herstellung eines Polsterelements und Vorrichtung zur Durchführung dieses Verfahrens.**

(30) Priorität: 01.08.85 DE 3527540

(43) Veröffentlichungstag der Anmeldung:
04.02.87 Patentblatt 87/6

(45) Bekanntmachung des Hinweises auf die Patenterteilung:
03.01.90 Patentblatt 90/1

(84) Benannte Vertragsstaaten:
FR GB IT

(56) Entgegenhaltungen:
EP-A- 0 033 116
EP-A- 0 226 105
DE-A- 1 901 828
FR-A- 2 407 835
US-A- 4 261 776

PATENT ABSTRACTS OF JAPAN, Band 8,
Nr. 274 (M-345)[1711], 14. Dezember 1984; &
JP-A-59 145 125 (MINORU SANGYO K.K.) 20-08-1984
PATENT ABSTRACTS OF JAPAN, Band 8,
Nr. 195 (M-323)[1632], 7. September 1984; &
JP-A-59 83 632 (INOUE EMU TEE PII K.K.) 15-05-1984
PATENT ABSTRACTS OF JAPAN, Band 8,
Nr. 238 (M-335)[1675], 31. Oktober 1984; &
JP-A-59 118 437 (IKEDA BUTSUSAN K.K.) 09-07-1984

(73) Patentinhaber: Grammer Sitzsysteme GmbH,
Wernher-von-Braun-Strasse 6, D-8450 Amberg(DE)

(72) Erfinder: Storch, Helmut, Am Südhang 5,
D-8450 Amberg(DE)

(74) Vertreter: LOUIS, PÖHLAU, LOHRENTZ & SEGETH,
Kesslerplatz 1 Postfach 3055, D-8500 Nürnberg-1(DE)

## Beschreibung

Die Erfindung betrifft ein Verfahren zur Herstellung eines Polsterelements gemäß dem Oberbegriff des Anspruchs 1 sowie eine Vorrichtung zur Durchführung dieses Verfahrens gemäß dem Oberbegriff des Anspruchs 4.

Ein derartiges Verfahren sowie eine Vorrichtung zur Durchführung dieses Verfahrens sind aus der DE-A 1 901 828 bekannt. Dort sind die beiden Formhälften der Gießform mit je einem Formrahmen ausgebildet, der als Kragen ausgebildet ist und der von der zugehörigen Gießformhälfte einstückig wegsteht. Durch diese bauliche Einheit zwischen jeder Formhälfte und dem zugehörigen Formrahmen kann der Bezug nur mittels den beiden Gießformhälften gehandhabt werden. Da derartige Gießformhälften jedoch eine ausreichende mechanische Festigkeit und Kompaktheit aufweisen müssen, um dem Druck des Reaktionsgemisches standzuhalten, ist die Handhabung des zwischen den Formhälften bzw. deren Formrahmen eingeklemmten Bezugs aufwendig.

Die JP-A 5 983 632 offenbart ein Verfahren und eine Vorrichtung zur Herstellung hinterschäumter Polsterelemente, wobei eine Gießform zur Anwendung gelangt, deren Innenoberfläche einen Hohlraum festlegt, welcher dem herzustellenden Polsterelement entspricht. Dort wird in den Hohlraum der Gießform hinein eine zylindrische Einlaßöffnung vorgesehen, durch die hindurch in die Gießform ein Reaktionsgemisch eingebracht wird. Im Hohlraum der Gießform wird vor dem Einbringen des Reaktionsgemisches ein Versteifungskörper angeordnet, der mit Verbindungsorganen aus dem Hohlraum der Gießform vorsteht, wobei die Verbindungsorgane zum Festhalten des Versteifungskörpers in einem Abstand von der Innenoberfläche der Gießform vorgesehen sind.

Der Erfindung liegt die Aufgabe zugrunde, ein Verfahren und eine Vorrichtung der eingangs genannten Art zu schaffen, wobei der Bezug des Polsterelementes unabhängig von den Gießformhälften problemlos handhabbar ist, um den Hohlraum auszubilden, der mit einem Reaktionsgemisch unter Ausbildung des Polsterelementes ausgeschäumt wird.

Diese Aufgabe wird verfahrensmäßig durch die Merkmale des kennzeichnenden Teiles des Anspruchs 1 und vorrichtungsmäßig durch die Merkmale des kennzeichnenden Teiles des Anspruchs 4 gelöst. Weiterbildungen der Erfindung sind in den Unteransprüchen gekennzeichnet.

Dadurch, daß mindestens ein Bezug mit seinen beiden Randteilen zwischen zwei von den Gießformhälften trennbare bzw. entfernbare Klemmrahmen einklemmbar ist, ist es möglich, den mindestens einen Bezug des herzustellenden Polsterteiles einfach zu handhaben, so daß innerhalb relativ kurzer Taktzeiten Polsterelemente herstellbar sind, und diese Polsterteile sowohl auf der Vorderseite als auch auf der Rückseite mit einem Bezug auszubilden. Durch das Einklemmen mindestens eines Bezuges zwischen zwei Klemmrahmen derart, daß der Bezug einen Hohlraum umschließt, wird gewährleistet, daß das die Vorderseite des Polsterelementes bedeckende Teil des Bezugs an die der Vorderseite des Polsterelementes entsprechende Formhälfte der Gießform und das die Rückseite des Polsterelementes bedeckende zweite Teil des Bezugs an die der Rückseite des Polsterelementes entsprechende Formhälfte der Gießform angesaugt wird, wenn an die beiden Formhälften der Gießform ein Vakuum angelegt wird. Durch die mindestens eine zwischen den beiden Klemmrahmen vorgesehene Eingießöffnung wird das Reaktionsgemisch zwischen den beiden Randteilen des mindestens einen Bezuges in die Gießform eingebracht, wobei die Randteile des Bezuges die Eingießöffnung quasi verschließen, solange noch kein Reaktionsgemisch durch die Eingießöffnung in die Gießform eingebracht wird. Auf diese Weise wird eine gute Abdichtung der Gießform gewährleistet, so daß das Vakuum zum Ansaugen der beiden Bezüge an die ihnen zugewandten Formhälften der Gießform gut wirksam werden kann.

Nach Ablauf der Reaktion des Reaktionsgemisches werden beim erfindungsgemäßen Verfahren nicht nur die beiden Formhälften der Gießform, sondern auch die beiden Klemmrahmen geöffnet. Diese Öffnung der Formhälften und der Klemmrahmen kann gleichzeitig oder nacheinander erfolgen.

Vor dem Einklemmen der Randteile des mindestens einen Bezuges zwischen den beiden Klemmrahmen kann in dem durch den Bezug umschlossenen Hohlraum ein Körper angeordnet werden. Bei einem derartigen Verfahren wird der Körper vorzugsweise in einem ersten Arbeitsgang zwischen den mindestens einen Bezug, bzw. zwischen zwei Bezüge eingelegt, und wird der mindestens eine Bezug anschließend mit seinen Randteilen zwischen den beiden Klemmrahmen eingeklemmt. Dadurch ergibt sich nicht nur eine Erhöhung der mechanischen Festigkeit des fertigen Polsterelementes, sondern auch eine Materialersparnis des Reaktionsgemisches eines derartigen Polsterelementes.

Dabei kann der Körper mit mindestens einem Verbindungsorgan versehen sein, das zwischen den beiden Klemmrahmen festgeklemmt wird und das aus der Gießform vorsteht.

Dieses Verbindungsorgan dient zur Verbindung des Polsterelementes beispielsweise mit einem anderen Teil eines Fahrzeugsitzes, d.h. zur Verbindung einer Kopfstütze mit einer Rückenlehne, zur Verbindung einer Rückenlehne mit einer Sitzplatte, o.dgl.

Das mindestens eine Verbindungsorgan wird zwischen den beiden Klemmrahmen vorzugsweise derart festgeklemmt, daß der Körper in der Gießform allseitig beabstandet angeordnet ist. Der Körper wird dann allseitig vom Reaktionsgemisch in Form eines Kunststoffschaumes umgeben, so daß sich der zentrale Körper in keiner Weise störend bemerkbar macht. Das mindestens eine Verbindungsorgan kann am zentralen Körper auch drehbar gelagert sein, so daß das fertige Polsterelement um das mindestens eine Verbindungsorgan, das aus dem Polsterelement vorsteht, verschwenkt werden kann. Das ist insbesondere bei Polsterelementen in Form von Kopfstützen vorteilhaft.

Bei dem im Hohlraum des Bezugs anordbaren Körper kann es sich um einen Hohlkörper handeln. Ein solcher Hohlkörper weist neben den Vorteilen bezüglich der mechanischen Festigkeit des Polsterelementes und der Materialersparnis des Reaktionsgemisches auch den erheblichen Vorteil auf, daß das fertige Polsterelement ein vergleichsweise geringes Gewicht aufweist.

Es hat sich weiterhin als zweckmäßig erwiesen, daß an der mindestens einen Eingießöffnung zwischen den Randteilen der beiden Bezüge ein nachgiebiges Angußelement angeordnet wird, und daß das Reaktionsgemisch mittels eines Mischkopfes durch das nachgiebige Angußelement in die Gießform eingebracht wird. Durch ein solches, zwischen den Randteilen der beiden Bezüge angeordnetes nachgiebiges Angußelement wird die Gießform quasi abgeschlossen, solange das Reaktionsgemisch mittels des Mischkopfes noch nicht in die Gießform eingebracht wird. Sobald das Reaktionsgemisch mittels des Mischkopfes in die Gießform eingebracht, d.h. eingepreßt wird, weitet sich das nachgiebige Anschlußelement auf, so daß die Einbringung des Reaktionsgemisches in die Gießform nicht behindert wird.

Mit der erfindungsgemäßen Vorrichtung zur Durchführung des beschriebenen Verfahrens ist es einfach möglich, das Polsterelement nicht nur auf der Vorderseite, sondern auch auf der Rückseite mit einer unebenen Profilierung auszubilden. Das ist vor allem bei Polsterelementen in Form von Rückenlehnen bzw. in Form von Kopfstützen für Fahrzeugsitze vorteilhaft, weil bei derartigen Polsterelementen die Rückseite genauso gut sichtbar ist wie die Vorderseite. Durch die Ausbildung der erfindungsgemäßen Vorrichtung mit zwei Klemmrahmen, die zwischen den beiden Formhälften der Gießform angeordnet und mit mindestens einer Eingießöffnung versehen sind, ist es möglich, zwischen den beiden Klemmrahmen mindestens einen Bezug mit seinem umlaufenden Randbereich derartig einzuklemmen, daß die beiden Teile des Bezugs an die beiden Formhälften faltenfrei angesaugt werden können. Die Gießform kann dann mit einem Reaktionsgemisch gefüllt werden, das sich mit den beiden Teilen des Bezuges verbindet, so daß der Bezug das Polsterteil nach Ablauf der Reaktion des Reaktionsgemisches faltenfrei bedeckt.

Die Erweiterung der Eingießöffnung kann beispielsweise konisch ausgebildet sein. Dadurch ergibt sich der Vorteil, daß das Reaktionsgemisch zwischen den Randteilen der beiden Bezüge durch die Eingießöffnung problemlos in die Gießform eingebracht werden kann.

Die umlaufenden Einsenkungen mit der zwischen den Einsenkungen vorgesehenen Erhebung bilden im Polsterelement Hinterschneidungen, wobei die Randbereiche der beiden Bezüge sich in vorteilhafter Weise entlang der umlaufenden Erhebung berühren. Die Randbereiche können nach der Entnahme des Polsterelementes aus der Gießform in einfacher Weise entlang der umlaufenden Erhebung vom Polsterelement abgeschnitten werden.

Dabei hat es sich als zweckmäßig erwiesen, daß die umlaufende Erhebung zwischen den umlaufenden Einsenkungen, die Hinterschneidungen bilden, unter den höchsten, die umlaufende Außenkontur des Polsterelementes bildenden Bereichen angeordnet ist. Durch diese Anordnung ergibt sich der Vorteil, daß sich die Schneidkanten, entlang welchen die beiden Randteile des mindestens einen Bezuges vom Polsterelement abgeschnitten werden, nach außen nicht bemerkbar machen. Es ergibt sich folglich ein Polsterelement mit einem Bezug, der das Polsterelement allseitig und insbesondere auch entlang der Berührungslinie des Bezugs dicht bedeckt, wobei die Schnittkanten der Randteile des Bezuges durch die Hinterschneidungen geschützt sind.

Die Anzahl der Ausnehmungen zur Durchführung der aus der Gießform vorstehenden Verbindungsorgane entspricht der Anzahl aus dem Polsterelement vorstehender Verbindungsorgane. Die/jede Ausnehmung weist dabei einen Querschnitt auf, der an den Querschnitt des entsprechenden Verbindungsorgans angepaßt ist. Auf diese Weise verschließt das Verbindungsorgan im geschlossenen Zustand die zwei Formhälften und die beiden Klemmrahmen aufweisende Gießform, so daß die Gießform vollständig mit dem Reaktionsgemisch ausgeschäumt werden kann.

Weitere Einzelheiten des erfindungsgemäßen Verfahrens zur Herstellung eines Polsterelementes und einer erfindungsgemäßen Vorrichtung zur Durchführung dieses Verfahrens werden nachfolgend anhand der Zeichnung beschrieben. Es zeigen:

Fig. 1 zwei zwischen zwei Klemmrahmen eingeklemmte Bezüge, zwischen denen ein Hohlkörper angeordnet ist, sowie die beiden voneinander beabstandeten Formhälften einer Gießform;

Fig. 2 eine der Fig. 1 entsprechende Gießform, deren beide Formhälften aneinander anliegen;

Fig. 3 eine räumliche geschnittene Darstellung eines Polsterelementes, das in einer Gießform gemäß Fig. 2 hergestellt worden ist;

Fig. 4 eine räumliche Darstellung einer Formhälfte einer erfindungsgemässen Gießform zur Herstellung einer rahmenförmigen Kopfstütze;

Fig. 5 eine räumliche Darstellung eines Abschnittes zweier Klemmrahmen zum Einklemmen eines schlauchförmigen Bezuges und zum Einklemmen eines rahmenförmigen Hohlkörpers im Inneren des schlauchförmigen Bezuges, zur Herstellung einer rahmenförmigen Kopfstütze;

Fig. 6 eine räumliche Darstellung einer Hälfte einer rahmenförmigen Kopfstütze mit einer umlaufenden Hinterschneidung;

Fig. 7 eine Frontansicht einer rahmenförmigen Kopfstütze;

Fig. 8 eine räumliche Darstellung einer Hälfte einer anderen Ausführungsform einer Kopfstütze mit einer umlaufenden Hinterschneidung, und

Fig. 9 eine räumliche Darstellung eines Polsterelementes in Form einer Rückenlehne eines Fahrzeugsitzes.

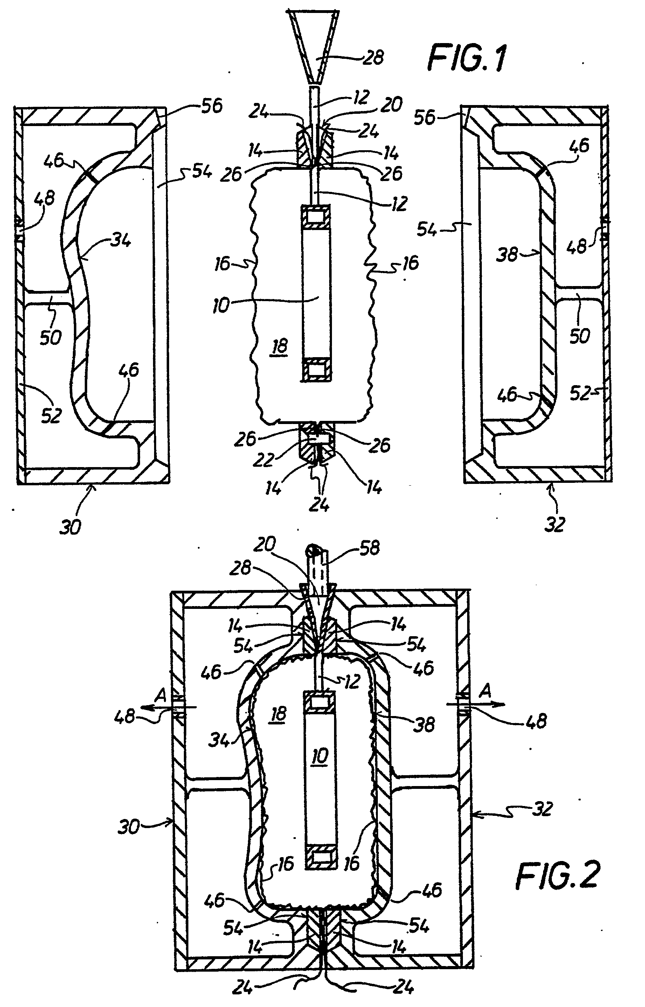

Fig. 1 zeigt einen Querschnitt durch einen rahmenförmigen Hohlkörper 10, der an einer Seite mindestens ein Verbindungsorgan 12 aufweist. Der rahmenförmige Hohlkörper 10 ist mit dem Verbindungsorgan 12 zwischen zwei Klemmrahmen 14 derart eingeklemmt, daß der rahmenförmige Hohlkörper 10 zwischen den beiden Klemmrahmen 14 zentral angeordnet ist. Mit der Bezugsziffer 16 sind zwei Bezüge bezeichnet, die zwischen den beiden Klemmrahmen 14 derartig eingeklemmt sind, daß zwischen ihnen ein Hohlraum 18 gebildet wird. In diesen Hohlraum 18 erstreckt sich eine in den beiden Klemmrahmen 14 vorgesehene Eingießöffnung 20 hinein. Die beiden Klemmrahmen sind durch Verbindungselemente 22, die als Schrauben ausgebildet sein können, miteinander derartig verbunden, daß die beiden Bezüge 16 mit ihren Randbereichen 24 zwischen den Berührungsflächen 26 der beiden Klemmrahmen 14 fest eingeklemmt sind und die beiden Bezüge 16 den Hohlraum 18 dicht umschließen. Mit der Bezugsziffer 28 ist ein nachgiebiges Angußelement bezeichnet, das mit seiner Außenkontur an die Kontur der Eingießöffnung 20 zwischen den beiden Klemmrahmen 14 angepasst ist.

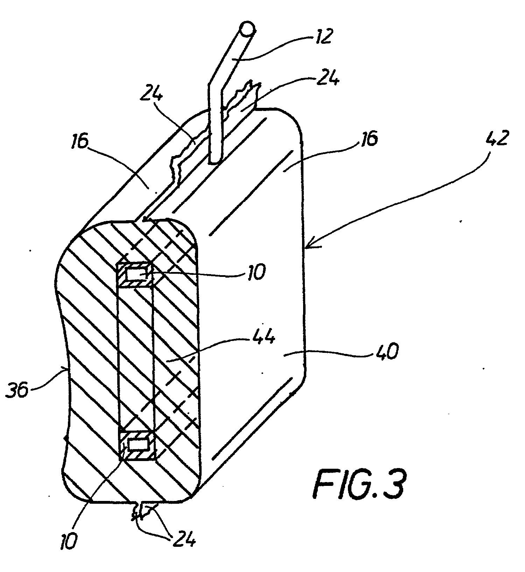

In Fig. 1 sind die beiden Formhälften 30 und 32 zur Herstellung eines Polsterelementes, das sowohl an seiner Vorderseite als auch an seiner Rückseite mit einem Bezug 16 bedeckt ist, voneinander und von den beiden Klemmrahmen 14 getrennt dargestellt. Die Innenkontur 34 der Formhälfte 30 entspricht der Kontur der Vorderseite 36 des Polsterelementes, während die Innenkontur 38 der Formhälfte 32 der erfindungsgemässen Gießform der Kontur 40 der Rückseite des Polsterelementes entspricht. Ein Polsterelement 42 mit einer der Innenkontur 34 der Formhälfte 30 entsprechenden Vorderseite 36 und einer der Innenkontur 38 der Formhälfte 32 der Gießform entsprechenden Rückseite 40 ist in Fig. 3 räumlich zur Hälfte dargestellt. Aus der zuletzt genannten Figur ist auch der rahmenförmige, im Zentrum des Polsterelementes 42 angeordnete und vom Bezug 16 allseitig beabstandete und mit einem Reaktionsgemisch 44 allseitig umschäumte rahmenförmige Trägerkörper 10, sowie ein Verbindungsorgan 12 ersichtlich, das aus dem Polsterelement 42 vorsteht. Aus dieser Figur sind auch die über das Polsterelement 42 überstehenden Randteile 24 der beiden Bezüge 16 ersichtlich. In Figur 3 ist das Verbindungsorgan 12 seitlich neben den beiden Randteilen 24 der Bezüge 16 angeordnet. Selbstverständlich ist es bei entsprechender Ausbildung der beiden Klemmrahmen 14 (s. Fig. 1) auch möglich, daß das Verbindungsorgan 12 zwischen den beiden Randteilen 24 der Bezüge 16 aus dem Polsterelement 42 vorsteht.

Die beiden Formhälften 30 und 32 sind - wie aus Fig. 1 ersichtlich ist - mit Ansaugöffnungen 46, sowie mit Anschlußöffnungen 48 zum Anschließen einer Vakuumpumpe versehen. Mit der Bezugsziffer 50 sind Rippen bezeichnet, zur mechanischen Versteifung der mit einem Gehäuse 52 ausgebildeten Formhälften 30 und 32 der erfindungsgemässen Gießform. Die beiden Formhälften 30 und 32 weisen außerdem Ausnehmungen 54 auf, deren Konturen an die Außenkontur der beiden Klemmrahmen 14 angepasst ist. Mit der Bezugsziffer 56 sind Ausnehmungen in den Formhälften 30 und 32 bezeichnet, die eine Verlängerung der Eingießöffnung 20 in den beiden Klemmrahmen 14 bilden.

Fig. 2 zeigt den mit seinem Verbindungsorgan 12 zwischen den beiden Klemmrahmen 14 eingespannten rahmenförmigen Hohlkörper 10, sowie die beiden ebenfalls zwischen den beiden Klemmrahmen 14 eingeklemmten Bezüge 16. Die Bezüge 16 sind mit ihren Randteilen 24 zwischen den beiden Klemmrahmen 14 derartig eingeklemmt, daß sie an der Innenkontur 34 bzw. an der Innenkontur 38 der Formhälften 30 bzw. 32 lose anliegen. In dieser Figur sind die Formhälften 30 und 32 der Gießform in ihrer geschlossenen Stellung dargestellt, in der sie die beiden Klemmrahmen 14 zwischen sich, d.h. in den Ausnehmungen 54 einklemmen. In dieser geschlossenen Stellung der Formhälften 30 und 32 wird an die Anschlußöffnungen 48 ein Vakuum angelegt, was durch die Pfeile A angedeutet worden ist. Dieses Vakuum pflanzt sich von den Anschlußöffnungen 48 durch die Öffnungen 46 in den Gießformen 30 und 32 fort, so daß die beiden Bezüge 16 an den Innenkonturen 34 und 38 der Formhälften 30 und 32 glatt anliegend angesaugt werden. Unmittelbar anschließend wird durch das in der Eingießöffnung 20 befindliche nachgiebige Angußelement 28 ein Mischkopf 58 eingesteckt. Mittels des Mischkopfes 58 wird durch die Eingießöffnung 20 in den Hohlraum 18, der durch die beiden an den Innenkonturen 34 und 38 der Formhälften 30 und 32 glatt anliegenden Bezüge begrenzt ist, ein Reaktionsgemisch eingebracht, das den Hohlraum 18 vollständig ausfüllt. Nach Ablauf der Reaktion des Reaktionsgemisches, bei der das Reaktionsgemisch aufschäumt, werden die beiden Formhälften 30 und 32 der Gießform wieder auseinanderbewegt, und anschließend werden die beiden Klemmrahmen 14 voneinander getrennt, so daß sich ein Polsterelement 42 ergibt, von dem in Fig. 3 eine Hälfte räumlich dargestellt ist. In einem abschließenden Arbeitsgang werden die über das Polsterelement 42 überstehenden Randteile 24 der beiden Bezüge 16 abgeschnitten.

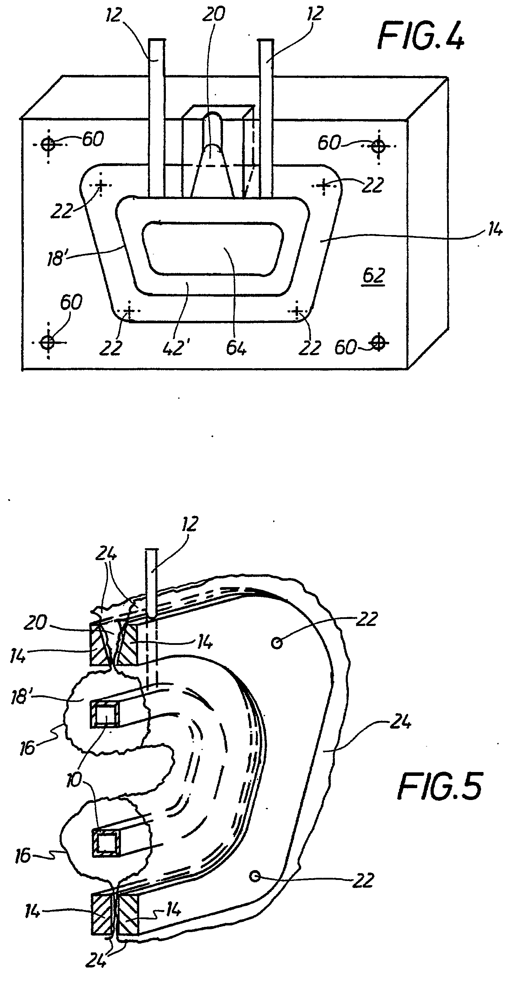

Fig. 4 zeigt eine Formhälfte 32', die zur Herstellung eines rahmenförmigen Polsterelementes 42' geeignet ist, in einer räumlichen Darstellung. Mit der Bezugsziffer 14 ist ein Klemmrahmen, mit der Bezugsziffer 22 sind Befestigungselemente zum Zusammenklemmen zweier Klemmrahmen 14, und mit der Bezugsziffer 12 sind zwei Verbindungsorgane bezeichnet, die aus der Formhälfte 32' vorstehen. Mit der Bezugsziffer 20 ist eine Eingießöffnung bezeichnet, durch die in die zwei Formhälften aufweisende Geißform ein Reaktionsgemisch eingebracht wird. Die beiden Formhälften, von denen in dieser Figur nur die Formhälfte 32' dargestellt ist, sind durch Verbindungsorgane miteinander verbunden, die sich durch Bohrungen 60 hindurch erstrecken, die in den beiden Formhälften miteinander fluchten. In dieser Figur ist der Hohlraum 18', an den in dieser Figur nicht dargestellte Bezüge angesaugt werden, im Zentrum der Formhälfte 32' durch einen mit der Berührungsfläche 62 abschließenden Ansatz 64 begrenzt.

Fig. 5 zeigt einen Teil eines rahmenförmigen Hohlkörpers 10, der mit Verbindungsorganen 12 zwischen zwei Klemmrahmen 14 eingeklemmt ist. Desgleichen ist zwischen den beiden Klemmrahmen 14 ein Bezug 16 mit seinen Randteilen 24 derartig eingeklemmt, daß der Bezug den rahmenförmigen Hohlkörper 10 schlauchförmig umgibt, wobei zwischen dem rahmenförmigen Hohlkörper 10 und dem schlauchförmigen Bezug 16 ein Hohlraum 18' ausgebildet ist. In dieser Figur ist eine Eingießöffnung 20 zum Eingießen eines Reaktionsgemisches in den Hohlraum 18' dargestellt. Das Reaktionsgemisch wird selbstverständlich in den Hohlraum 18' erst dann eingegossen, wenn der Bezug 16 an eine Gießform angesaugt ist, wie sie beispielsweise zur Hälfte in Fig. 4 dargestellt ist. Mit der Bezugsziffer 22 sind in Fig. 5 Verbindungsorgane bezeichnet, mit deren Hilfe die beiden Klemmrahmen 14 miteinander verbunden werden.

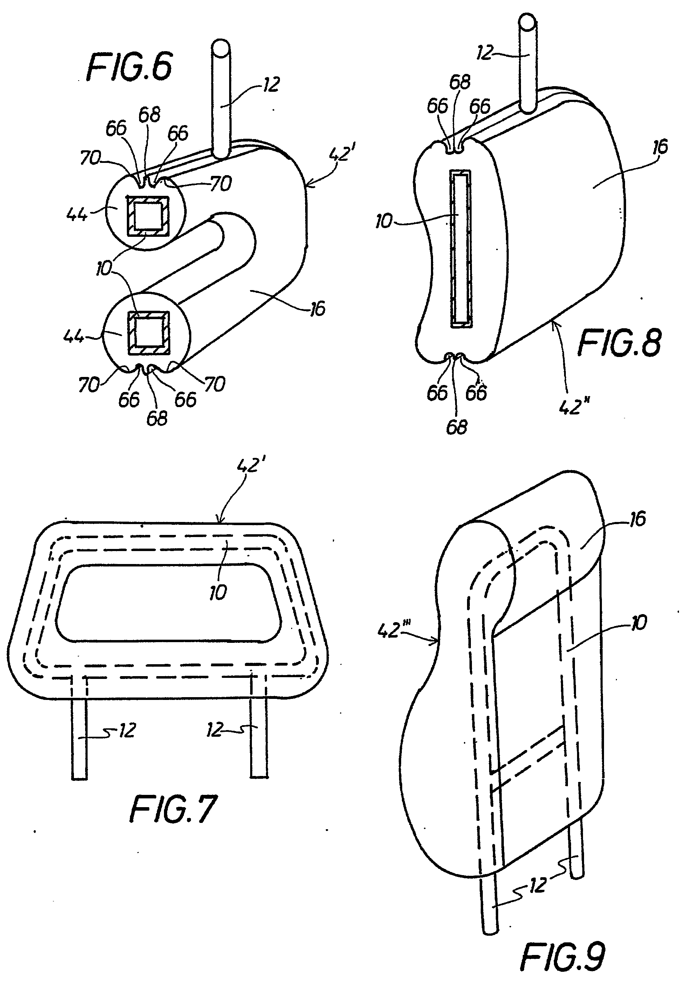

Fig. 6 zeigt eine räumliche Darstellung einer Hälfte eines Polsterelements 42' in Form einer rahmenförmigen Kopfstütze mit Verbindungsorganen 12 und einem rahmenförmigen Hohlkörper 10, der allseitig von einem Reaktionsgemisch 44 umgeben ist. Ein Bezug 16 bedeckt das Polsterelement 42' allseitig. Das Polsterelement 42' weist zwei umlaufende Einsenkungen 66 und zwischen den Einsenkungen 66 ein umlaufende Erhebung 68 auf. Die Einsenkungen 66 bilden gemeinsam mit der zwischen ihnen befindlichen Erhebung 68 Hinterschneidungen. Die Erhebung 68 ist vorzugsweise tiefer angeordnet als die höchsten Bereiche 70, so daß die Kanten des Bezuges 16, entlang welchen die Randteile des Bezuges 16 entlang der Erhebung 68 abgeschnitten werden, nicht über die umlaufende Kontur des Polsterelementes 42' überstehen.

Die Fig. 7 zeigt ein Polsterelement 42' in Form einer rahmenförmigen Kopfstütze mit zwei Verbindungsorganen 12, mit denen die Kopfstütze in eine Rückenlehne eines Fahrzeugsitzes eingesteck werden kann. Die Verbindungsorgane 12 sind mit einem rahmenförmigen Körper 10 verbunden, der in dieser Figur strichliert dargestellt ist.

Fig. 8 zeigt eine andere Ausführungsform eines Polsterelementes 42" in Form einer Kopfstütze, die mit Verbindungsorganen 12 versehen ist, von denen in dieser Figur nur eines sichtbar ist. Mit der Bezugsziffer 10 ist ein im Inneren des Polsterelementes 42" befindlicher Hohlkörper bezeichnet, der mit den Verbindungsorganen 12 verbunden ist. Das Polsterelement 42" weist zwei umlaufende Einsenkungen 66 und eine zwischen den Einsenkungen 66 angeordnete umlaufende Erhebung 68 auf. Auch bei dieser Ausbildung eines erfindungsgemässen Polsterelementes 42" bilden die Einsenkungen 66 mit der Erhebung 68 Hinterschneidungen.

Fig. 9 zeigt eine räumliche Darstellung eines Polsterelementes 42''' in Form einer Rückenlehne eines Fahrzeugsitzes. Aus der Unterseite des Polsterelementes 42''' ragen zwei Verbindungsorgane 12 heraus, die in Ausnehmungen in einer Sitzplatte eines Fahrzeugsitzes einsteckbar sind. Mit der Bezugsziffer 10 ist ein im Inneren des Polsterelementes 42''' angeordneter Körper bezeichnet, der zur mechanischen Versteifung der Rückenlehne dient Auch bei diesem Polsterelement 42''' in Form einer Rückenlehne eines Fahrzeugsitzes bedeckt der Bezug 16 sowohl die Vorderseite als auch die Rückseite der Rückenlehne.

## Patentansprüche

1. Verfahren zur Herstellung eines Polsterelementes (42), bei dem in eine zwei Formhälften (30, 32) mit je einem Formrahmen aufweisende verschließbare Gießform ein Bezug (16) aus mindestens einem Bezugsteil eingebracht und der Bezug (16) festgeklemmt und die Gießform entlang den Formrahmen verschlossen wird, wobei der Bezug einen Hohlraum bildet, an die Gießform ein Unterdruck angelegt wird, wobei sich der Bezug an die Gießform anlegt, anschließend durch mindestens eine Eingießöffnung in der Gießform ein Reaktionsgemisch in den Hohlraum eingebracht wird, und nach Ablauf der Reaktion des Reaktionsgemisches die Gießform geöffnet und das Polsterelement aus der Gießform entnommen wird, dadurch gekennzeichnet, daß als Formrahmen zwei von den beiden Formhälften (30, 32) entfernbare und zwischen den beiden Formhälften (30, 32) anordbare Klemmrahmen (14) verwendet werden, daß der Bezug (16) mit seinen Randteilen (24) im von der Gießform entfernten Zustand zwischen den beiden Klemmrahmen (14) eingeklemmt wird, und daß das Reaktionsgemisch zwischen den Randteilen (24) des Bezugs (16) eingegossen wird.

2. Verfahren nach Anspruch 1, wobei in dem durch den Bezug umschlossenen Hohlraum ein Körper angeordnet wird, dadurch gekennzeichnet, daß der Körper (10) gemeinsam mit den Randteilen (24) des Bezugs (16) zwischen den beiden Klemmrahmen (14) eingeklemmt wird.

3. Verfahren nach Anspruch 1, dadurch gekennzeichnet, daß an der/jeder Eingießöffnung (20) zwischen den Randteilen (24) des Bezugs (16) ein flexibles Angußelement (28) angeordnet wird, durch welches das Reaktionsgemisch in die Gießform eingebracht wird.

4. Vorrichtung zur Durchführung des Verfahrens nach einem der vorhergehenden Ansprüche mit einer verschließbaren, an eine Unterdruckquelle anschließbaren Gießform, die zwei Formhälften (30, 32) mit je einem Formrahmen aufweist, die miteinander dicht verbindbar und zum Einklemmen der Randteile (24) des Bezugs (16) vorgesehen sind, und die mit mindestens einer Eingießöffnung (20) zum Einbringen eines Reaktionsgemisches in den durch den Bezug (16) festgelegten Hohlraum versehen sind, dadurch gekennzeichnet, daß die Formrahmen durch zwei von den beiden Formhälften (30, 32) entfernbare und zwischen den beiden Formhälften (30, 32) anordbare Klemmrahmen (14) gebildet sind, die an ihren einander zugewandten Berührungsflächen mindestens eine die Eingießöffnung (20) bildende Ausnehmung aufweisen.

5. Vorrichtung nach Anspruch 4, dadurch gekennzeichnet, daß die Eingießöffnung (20) in Richtung vom Hohlraum zur Außenseite der Gießform erweitert ausgebildet ist.

6. Vorrichtung nach Anspruch 5, dadurch gekennzeichnet, daß die beiden Klemmrahmen (14) außer der Eingießöffnung (20) an ihren einander zugewandten Berührungsflächen mindestens eine Ausnehmung (20) zur Durchführung des aus der Gießform vorstehenden Verbindungsorgans (12) aufweisen.

7. Vorrichtung nach einem der Ansprüche 4 bis 6, dadurch gekennzeichnet, daß die Eingießöffnung (20) ein flexibles Angußelement aufweist.

8. Vorrichtung nach Anspruch 4, dadurch gekennzeichnet, daß die beiden Klemmrahmen (14) zur Ausbildung von zwei entlang dem Polsterelement (42, 42', 42", 42"') umlaufender Einsenkungen (66) und einer zwischen den Einsenkungen (66) vorgesehenen umlaufenden Erhebung (68), von der die Randteile (24) des mindestens einen Bezuges (16) wegstehen, in der Nachbarschaft ihrer Berührungsfläche den umlaufenden Einsenkungen (66) entsprechende Erhebungen und an der Berührungsfläche eine der umlaufenden Erhebung (68) entsprechende Einsenkung aufweisen.

9. Vorrichtung nach Anspruch 8, dadurch gekennzeichnet, daß die umlaufende Erhebung (68) zwischen den umlaufenden Einsenkungen (66) niedriger ist als die die umlaufende Außenkontur des Polsterelementes (42, 42', 42", 42"') bildenden Bereiche (70) seitlich neben den umlaufenden Einsenkungen (66).

**Claims**

1. A method for manufacturing an upholstery element (42) wherein a cover (16) consisting of at least one cover part is introduced into a sealable mould having two mould halves (30, 32) with one mould frame each, and the cover (16) is clamped and the mould is closed along the mould frame, the cover forming a cavity, low pressure is applied to the mould, the cover adhering to the mould, a reaction mixture is subsequently introduced into the cavity through at least one inlet opening in the mould, and the mould is opened after the reaction of the reaction mixture has been completed and the upholstery element (42) is extracted from the mould, characterized in that two clamping frames (14), removable from the two mould halves (30, 32) and which can be arranged between the two mould halves (30, 32), are used as the mould frames, that the cover (16) is clamped between the two clamping frames (14) when it is remote from the mould, and that the reaction mixture is poured in between the edge portions (24) of the cover (16).

2. A method according to claim 1, wherein a body is arranged in the cavity surrounded by the cover (16), characterized in that the body (10) is clamped in between the two clamping frames (14) together with the edge portions (24) of the cover (16).

3. A method according to claim 1, characterized in that a flexible feeder element (28) through which the reaction mixture is introduced into the mould, is arranged at the/each inlet opening (20) between the edge portions (24) of the cavity.

4. An apparatus for the implementation of the method according to one of the preceding claims with a sealable mould which can be connected to a low pressure source, which mould has two mould halves (30, 32) with one mould frame each, designed to be capable of being tightly joined together and for clamping the edge portions (24) of the cover (16), and which are provided with at least one inlet opening (20) for the introduction of a reaction mixture into to the cavity defined by the cover (16), characterized in that the mould frames are formed by two clamping frames (14) removable from the two mould halves (30, 32) and which can be arranged between the two mould halves (30, 32), which clamping frames have on their contact surfaces facing each other at least one recess forming the inlet opening (20).

5. An apparatus according to claim 4, characterized in that the inlet opening (20) is formed to flare in the direction from the cavity towards the outside of the mould.

6. An apparatus according to claim 5, characterized in that the two clamping frames (14) have, apart from the inlet opening (20), at their contact surfaces facing each other, at least one recess (20) for the passing through of the connecting element (12) projecting out of the mould.

7. An apparatus according to one of claims 4 to 6, characterized in that the inlet opening (20) has a flexible feeder element.

8. An apparatus according to claim 4, characterized in that the two clamping frames (14) have near their contact surface raised portions corresponding to the peripheral furrows (66) and at the contact surface a furrow corresponding to the peripheral raised portion (68) in order to form two furrows (66) extending along the upholstery element (42, 42', 42", 42"') and a peripheral raised portion (68) provided between the furrows (66), from which raised portion there project the edge portions (24) of at least the one cover (16).

9. An apparatus according to claim 8, characterized in that the peripheral raised portion (68) is lower between the peripheral furrows (66) than the zones (70) forming the outer contour of the upholstery element (42, 42', 42", 42"') laterally next to the peripheral furrows (66).

**Revendications**

1. Procédé pour la fabrication d'un élément de rembourrage (42) selon lequel, dans un moule de coulée fermable présentant deux demi-moules (30, 32), avec chacun une carcasse de moule, est introduit un revêtement (16) constitué d'au moins une partie de revêtement, le revêtement (16) est serré et le moule de coulée fermé le long de la carcasse de moule, le revêtement formant une cavité, une dépression est appliquée sur le moule de coulée puis, par au moins un orifice de coulée, un mélange réactif est introduit dans la cavité et après achèvement de la réaction du mélange réactif, le moule de coulée est ouvert et l'élément de rembourrage extrait du moule de coulée, caractérisé par le fait que, pour servir de carcasse de moule, on a deux châssis de serrage (14) détachables des deux demi-moules (30, 32) et pouvant être placés entre les deux demi-moules (30, 32), que le revêtement (16) est serré par ses parties marginales (24) entre les deux châssis de serrage (14) dans une position écartée du moule, et que le mélange réactif est versé entre les parties marginales (24) du revêtement (16).

2. Procédé selon la revendication 1, dans lequel un corps est disposé dans la cavité entourée par le revêtement, caractérisé par le fait que le corps (10) est serré entre les deux châssis de serrage (14) avec les parties marginales (24) du revêtement (16).

3. Procédé selon la revendication 1, caractérisé par le fait que sur l'orifice ou sur chaque orifice de coulée (20) entre les parties marginales (24) du revêtement (16), il est disposé un élément d'injection (28) flexible, au moyen duquel le mélange réactif est introduit dans le moule.

4. Dispositif pour la mise en œuvre du procédé selon l'une des revendications précédentes ayant un moule de coulée fermable pouvant être raccordé à une source de vide, lequel moule présente deux demi-moules (30, 32) avec chacun une carcasse de moule, qui peuvent être unis de façon hermétique et sont prévus pour le serrage des parties marginales (24) du revêtement (16) et qui sont pourvus d'au moins un orifice de coulée (20) pour apport d'un mélange réactif dans la cavité déterminée par le revêtement (16), caractérisé par le fait que les carcasses de moule sont formées par deux châssis de serrage (14) détachables des deux demi-moules (30, 32) et disposables entre les deux demi-moules (30, 32), lesquels présentent sur leurs surfaces de contact se faisant face, au moins un évidement formant l'orifice de coulée (20).

5. Dispositif selon la revendication 4, caractérisé par le fait que l'orifice de coulée (20) s'évase de la cavité vers la face extérieure du moule de coulée.

6. Dispositif selon la revendication 5, caractérisé par le fait que les deux châssis de serrage (14) présentent sur leurs surfaces de contact en vis-à-vis, indépendamment de l'orifice de coulée (20), un évidement (20) au moins pour le passage de l'organe de liaison (12) saillant en dehors du moule de coulée.

7. Dispositif selon l'une des revendications 4 à 6, caractérisé par le fait que l'orifice de coulée (20) présente un élément d'injection flexible.

8. Dispositif selon la revendication 4, caractérisé par le fait que les deux châssis de serrage (14) présentent, pour former deux rainures périphériques (66) le long de l'élément de rembourrage (42, 42', 42", 42''') et une nervure périphérique (68) prévue entre les nervures (66), dont s'écartent les parties périphériques (24) d'au moins un revêtement (16), des nervures correspondant aux rainures périphériques (66) au voisinage de leurs surfaces de contact et une rainure correspondant à la nervure périphérique (68) à la surface de contact.

9. Dispositif selon la revendication 8, caractérisé par le fait que la nervure périphérique (68) comprise entre les rainures périphériques (66) est plus basse que les zones (70) constituant le contour extérieur périphérique de l'élément de rembourrage (42, 42', 42", 42''') latéralement aux rainures périphériques (66).

*FIG.1*

*FIG.2*

FIG.3

FIG.4

FIG.5

FIG.6

FIG.8

FIG.7

FIG.9